Europäisches Patentamt

**European Patent Office**

Office européen des brevets

(11) Veröffentlichungsnummer: **0 151 441**
**A2**

(12) **EUROPÄISCHE PATENTANMELDUNG**

(21) Anmeldenummer: **85100765.8**

(22) Anmeldetag: **25.01.85**

(51) Int. Cl.⁴: **B 29 C 47/34**
**B 65 G 15/14**

(30) Priorität: **03.02.84 DE 3403684**

(43) Veröffentlichungstag der Anmeldung:
**14.08.85 Patentblatt 85/33**

(84) Benannte Vertragsstaaten:
**AT BE CH DE FR GB IT LI LU NL SE**

(71) Anmelder: **Battenfeld Extrusionstechnik GmbH**
**Königstrasse 45**
**D-4970 Bad Oeynhausen(DE)**

(72) Erfinder: **Reimann, Dieter**
**Breslauer Weg 5**
**D-6604 Brebach-Fechingen(DE)**

(74) Vertreter: **Müller, Gerd et al,**
**Patentanwälte**
**HEMMERICH-MÜLLER-GROSSE-POLLMEIER**
**Hammerstrasse 2**
**D-5900 Siegen 1(DE)**

(54) **Antriebsvorrichtung für Zweifach-Raupenabzüge, insbesondere für Extrusionsanlagen oder dergleichen.**

(57) Für Zweifach-Raupenabzüge 1 zum Abziehen von Kunststoff-Profilen aus Extrusionsanlagen oder dergleichen wird eine Antriebsvorrichtung geschaffen, welche die nachteiligen Wirkungen unterschledlicher Verschleißerscheinungen, die hauptsächlich an den Raupenketten 4 und 5 der beiden zusammenwirkenden Raupen 2 und 3 auftreten, eliminiert. Hierzu wird zwischen zwei von einem gemeinsamen Elektromotor 12 über ein Untersetzungsgetriebe 13 beaufschlagte Kettentriebe 16 und 19 ein Ausgleichs- bzw. Differentialgetriebe 24 angeordnet. Ein Kettentrieb 16 verbindet das Untersetzungsgetriebe 13 ausschließlich mit der Antriebswelle 11 einer Raupe 3, während ein zweiter Kettentrieb 19, wiederum die Verbindung zwischen den beiden Raupen 3 und 2 herstellt.

EP 0 151 441 A2

Antriebsvorrichtung für Zweifach-Raupenabzüge,
insbesondere für Extrusionsanlagen oder dergleichen

Die Erfindung betrifft eine Antriebsvorrichtung für Zweifach-Raupenabzüge zum Abziehen von Kunststoffprofilen aus Extrusionsanlagen oder dergleichen, bei welcher die beiden Raupenabzüge durch ein mit einem Elektromotor, insbesondere Gleichstrommotor, in Verbindung stehendes Untersetzungsgetriebe über Kettentriebe formschlüssig gleichlaufend antreibbar sind und der Wirkabstand zwischen den beiden Raupenabzügen über bewegliche Kupplungen, bspw. Parallelkurbeltriebe, veränderbar ist.

Zweifach-Raupenabzüge zum gleichmäßigen Abziehen von Kunststoffprofilen aus Extrusionsanlagen oder dergleichen sind bereits bekannt. Als Antriebsvorrichtungen für solche Zweifach-Raupenabzüge finden dabei einerseits Einzelantriebe Verwendung, bei denen zwei Gleichstrom- bzw. Drehstrommotore jeweils über ein eigenes Untersetzungsgetriebe mit der Antriebswelle einer Raupe gekuppelt sind und die beiden Motoren über eine elektrische Welle für Synchronlauf miteinander verbunden sind.

Andererseits sind aber auch bereits Zweifach-Raupenabzüge im Einsatz, die als Antriebsvorrichtung einen Zentralantrieb der gattungsgemäßen Art aufweisen, bei welchem als ein mit einem Elektromotor, insbesondere Gleichstrommotor, in Verbindung stehendes Untersetzungsgetriebe jeweils über Kettentriebe formschlüssig gleichlaufend die beiden Raupen antreibt.

0151441

Aufgrund der mechanischen Kopplung der beiden Raupen über den Zentralantrieb ist es dann erforderlich, den Wirkabstand zwischen den beiden Raupen über bewegliche Kupplungen, bspw. Parallelkurbelgetriebe, veränderbar zu machen.

Der Anlagenaufwand ist für die beiden unterschiedlichen Antriebsvorrichtungen etwa gleich groß. Jedoch erweist sich der Zentralantrieb durch den formschlüssigen Gleichlauf zwischen den beiden Raupen gegenüber den Einzelantrieben mit kraftschlüssigem Gleichlauf zwischen den Raupen insofern als vorteilhafter, als sich Schlupferscheinungen zwischen den beiden Raupen, die beim Abziehen der Kunststoffprofile unerwünschte Materialverschiebungen an diesen erzeugen können, weitestgehend vermeiden lassen.

Unzulänglichkeiten beim Einsatz der Zweifach-Raupenabzüge zum Abziehen von Kunststoffprofilen aus Extrusionsanlagen oder dergleichen erwachsen - unabhängig davon, ob als Antriebsvorrichtungen Einzelantriebe oder aber der Zentralantrieb benutzt wird - daraus, daß in erster Linie die Raupenketten der einzelnen Raupen, in zweiter Linie aber auch die Ketten der zum Antrieb dieser Raupen benutzten Kettentriebe einem mehr oder weniger unterschiedlichen Verschleiß ausgesetzt sind. Dieser Verschleiß wirkt sich dabei hauptsächlich an den Gelenkstellen zwischen den einzelnen Kettengliedern, also am Umfang der Gelenkbolzen und an der Laibung der von ihnen durchgriffenen Löcher der Kettenglieder aus. Dieser Verschleiß führt dabei zu einer unerwünschten Vergrößerung der Kettenteilung, folglich auch zu einer unvermeidbaren Vergrößerung der wirksamen Kettenlänge.

Diese Erscheinungen können sich in den Raupenketten und auch an den Kettentrieben der beiden zusammenwirkenden Raupen unterschiedlich bemerkbar machen, wobei sich das Antriebsverhalten zwischen den beiden zusammenwirkenden Raupen
in unerwünschter Weise verändert und nachteilige Folgen
an dem von ihnen abgezogenen Kunststoffprofil zeitigt.

In der Kinematik eines Kettentriebes - die auch für die Raupenketten der Raupenabzüge gilt - ist jedes der als Antriebs-
und/oder Umlenkglieder benutzten Kettenräder gewissermaßen
als ein um sein Flächenzentrum drehbares Vieleck wirksam.
Bei einer vollen Umdrehung des Kettenrades bewegt sich daher
die mit ihm in Eingriff befindliche Kette um die Anzahl der
vorhandenen Teilungsabschnitte, die der Zählzahl des betreffenden Vielecks entspricht.

Ergeben sich nun aufgrund der im Betrieb unvermeidbaren Verschleißerscheinungen unterschiedliche Teilungen an den Raupenketten der oberen und der unteren Raupe und/oder an den Ketten der ihnen zur Aufrechterhaltung der Antriebsverbindung
zugeordneten Kettentriebe, dann treten an der oberen und
unteren Raupe zwangsläufig unterschiedliche Geschwindigkeiten auf, obwohl die Antriebsvorrichtung selbst für kraftschlüssigen oder formschlüssigen Gleichlauf ausgelegt ist.
Selbst bei gleicher Drehzahl identisch ausgelegter Antriebskettenräder wird also aufgrund unterschiedlicher Änderungen in der Kettenteilung kein Synchronlauf der beiden Raupen
gewährleistet.

Zwischen den beiden Raupenketten des Zweifach-Raupenabzugs
soll das aus der Extrusionsanlage oder dergleichen austretende
Kunststoffprofil kraftschlüssig und mit einer bestimmten Abzugskraft, welche durch Anpressen der oberen Raupen in Richtung gegen die untere Raupe erzeugt wird, transportiert
werden. Wenn nun aber die Raupenkette einer der Raupen
aufgrund der verschleißbedingt veränderten Kettenteilung
eine andere Laufgeschwindigkeit annehmen will als die Raupenkette der zweiten Raupe, dann wirkt dieser Tendenz das kraftschlüssig zwischen beiden Raupen eingeklemmte Kunststoffprofil - mehr oder weniger stark - entgegen. Hieraus resultiert dann wiederum nicht nur eine Qualitätsbeeinträchtigung am abgezogenen Kunststoffprofil, sondern es stellt sich ein zusätzlicher innerer Zug in der betreffenden Raupenkette ein, welcher wiederum einen verstärkten Verschleiß verursacht. Die Folge hiervon ist dann bei einem Zweifach-Raupenabzug mit Zentralantrieb, daß sich der Gesamtwirkungsgrad der Antriebsvorrichtung verschlechtert. Bei Zweifach-Raupenabzügen mit einer aus Einzelantrieben bestehenden Antriebsvorrichtung ist hingegen die Folge, daß mindestens einer der beiden Antriebsmotore über kurz oder lang ausfällt.

Die Erfindung bezweckt die Beseitigung der den bekannten Antriebsvorrichtungen für Zweifach-Raupenabzüge eigentümlichen Unzulänglichkeiten. Ausgehend von einer als Zentralantrieb ausgelegten, gattungsgemäßen Antriebsvorrichtung für Zweifach-Raupenabzüge liegt der Erfindung die Aufgabe zugrunde, mit möglichst geringem technischen Mehraufwand das Betriebsverhalten der Zweifach-Raupenabzüge zu optimieren, und zwar insbesondere die nachteiligen Folgen der durch unvermeidbare Verschleißerscheinungen bedingten Änderungen in der Kettenteilung der Raupenketten und/oder an den Ketten der Kettentriebe zu beseitigen.

Die Lösung dieses komplexen Problems besteht nach dem Kennzeichen des Anspruchs 1 darin, daß ein Kettentrieb das Untersetzungsgetriebe ausschließlich mit der Antriebswelle einer Raupe verbindet, während ein zweiter Kettentrieb die Antriebsverbindung zwischen den beiden Raupen herstellt, und daß zwischen der Antriebswelle der einen Raupe und dem Antriebsrad des zweiten Kettentriebes ein Ausgleichs- bzw. Differentialgetriebe angeordnet ist.

Als Ausgleichs- bzw. Differentialgetriebe kann dabei gemäß Anspruch 2 in besonders vorteilhafter Weise ein Stirnradumlauf- oder -Planetengetriebe zum Einsatz gelangen. Selbstverständlich wäre aber auch in besonderen Anwendungsfällen ein Kegelrad-Planetengetriebe zum Einsatz geeignet.

Um innerhalb vorgegebener Grenzen eine einfache und sichere Änderung des Wirkabstandes zwischen den beiden zusammenarbeitenden Raupenabzügen zu erreichen, ist nach Anspruch 3 vorgesehen, daß zwischen das Abtriebsrad des zweiten Kettentriebes und die Antriebswelle der zweiten Raupe ein doppeltes Parallelkurbelgetriebe eingeschaltet wird. Die Lagenvariation zwischen den beiden zusammenwirkenden Raupen kann hierdurch wesentlich erweitert werden, ohne das optimierte Betriebsverhalten des Zweifach-Raupenabzuges zu beeinträchtigen.

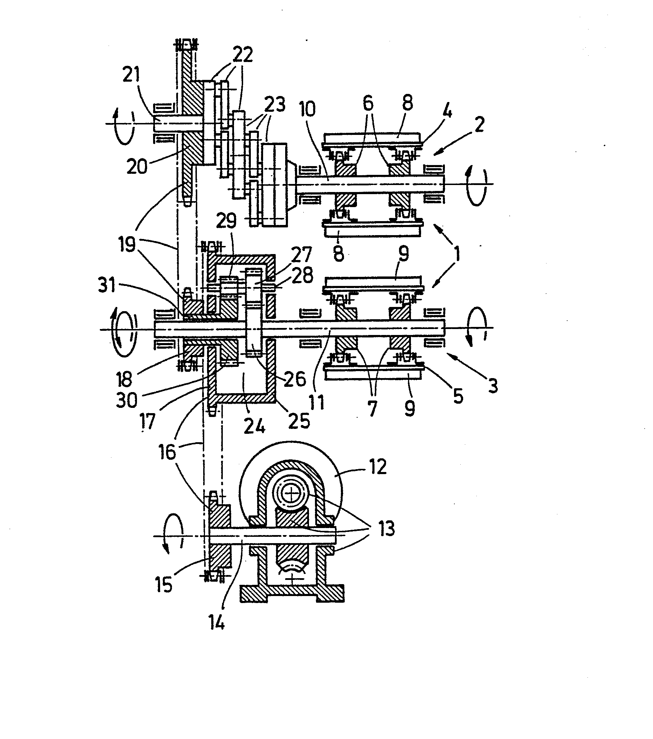

Weitere Merkmale und Vorteile der erfindungsgemäßen Antriebsvorrichtung werden nachfolgend anhand der einzigen Zeichnungsfigur beschrieben, welche in schematisierter Prinzipdarstellung einen Zweifach-Raupenabzug mit einer als Zentralantrieb ausgelegten Antriebsvorrichtung wiedergibt.

In der Zeichnung ist ein Zweifach-Raupenabzug 1 gezeigt, wie er zum gleichmäßigen Abziehen von Kunststoffprofilen innerhalb einer Extrusionsanlage benutzt wird. Er setzt sich aus der oberen Raupe 2 und der unteren Raupe 3 zusammen.

Die obere Raupe 2 hat dabei eine endlose Raupenkette 4, die um zwei im Abstand hintereinander angeordnete Kettenradpaare 6 herumgeführt wird, wobei von den beiden Kettenradpaaren 6 in der Zeichnung nur eines dargestellt ist. Die Raupenkette ist mit gleichmäßig über ihre ganze Länge verteilt angeordneten Greifelementen 8 besetzt, die vorzugsweise eine auf die vorgegebene Kettenteilung abgestimmte Anordnung zueinander haben. Das in der Zeichnung dargestellte Kettenradpaar 6 der oberen Raupe 2 wirkt als Antriebs-Kettenradpaar und ist daher auf eine Antriebswelle 10 aufgekeilt.

Die untere Raupe 3 weist ebenfalls eine endlose Raupenkette 5 auf, die um zwei im Abstand hintereinanderliegende
Kettenradpaare 7 umgelenkt wird, von denen nur das Antriebs-
Kettenradpaar 7 gezeigt ist, welches drehfest mit einer Antriebswelle 11 in Verbindung steht.

Auch die Raupenkette 5 der unteren Raupe 3 ist mit Greifelementen 9 besetzt, die eine in Längsrichtung gleichmäßig
verteilte Anordnung haben und in ihrer Lage auf die vorgegebene Kettenteilung abgestimmt sind.

Sämtliche Greifelemente 8 bzw. 9 der Raupenketten 4 bzw. 5
sind auswechselbar an den einzelnen Kettengliedern der Raupenketten 4 bzw. 5 befestigt, bspw. dadurch, daß sie seitlich
in im Querschnitt etwa C-förmige Halteschienen der Kettenglieder eingeschoben werden können.

Die gemeinsame Antriebsvorrichtung für die beiden Raupen
2 und 3 des Zweifach-Raupenabzuges 1 weist einen Elektromotor 12, bspw. einen thyristorgesteuerten Gleichstrommotor,
auf, dessen Welle mit einem Untersetzungsgetriebe 13, z.B.
einem Schneckengetriebe, in Verbindung steht. Mit der Abtriebswelle 14 des Untersetzungsgetriebes 13 steht das Antriebskettenrad 15 eines Kettentriebes 16 in drehfester Verbindung, während das Abtriebskettenrad 17 des Kettentriebes
16 auf der Antriebswelle 11 für die untere Raupe 3 angeordnet ist.

Beim gezeigten Ausführungsbeispiel hat das Abtriebskettenrad
17 des Kettentriebes 16 einen größeren Durchmesser als dessen Antriebskettenrad 15, so daß der Kettentrieb 16 zur Antriebswelle 11 hin mit Untersetzung arbeitet.

Auf der Antriebswelle 11 für die untere Raupe 3 ist weiterhin ein Antriebskettenrad 18 eines zweiten Kettentriebes 19
angeordnet. Der zweite Kettentrieb 19 arbeitet mit einem
Abtriebskettenrad 20 auf einer Welle 21 zusammen. Die das
Abtriebskettenrad 20 tragende Welle 21 ist über zwei hintereinandergeschaltete Parallelkurbelgetriebe 22 und 23 mit
der Antriebswelle 10 für die obere Raupe 2 des Zweifach-Raupenabzuges 1 drehfest verbunden. Die beiden Parallelkurbeltriebe 22 und 23 machen eine stufenlose Lagenänderung, und
zwar insbesondere eine Abstandsänderung, zwischen den beiden Raupen 2 und 3 des Zweifach-Raupenabzuges 1 möglich,
ohne daß hierdurch eine Änderung der Antriebsverhältnisse
eintritt.

Zwischen der Antriebswelle 11 für die untere Raupe 3 und
dem Antriebskettenrad 18 des zweiten Kettentriebes 19
ist ein Ausgleichs- bzw. Differentialgetriebe 24 eingebaut.
Dieses Ausgleichs- bzw. Differentialgetriebe 24 hat dabei ein
mit dem Abtriebskettenrad 17 des ersten Kettentriebes 16 fest
verbundenes Gehäuse, wobei dieses Gehäuse 25 mit dem Abtriebskettenrad 17 relativ drehbar auf der Antriebswelle 11 für die
untere Raupe 3 lagert. Drehfest auf der Antriebswelle 11
ist ein Sonnenrad 26 angeordnet, mit dem ein Planetenrad
27 kämmt, das auf einer Welle 28 im Gehäuse 25 und im Abtriebskettenrad 17 lagert. Gleichachsig mit dem Planetenrad
27 ist auf der Welle 28 ein weiteres Planetenrad 29 aufgekeilt, welches wiederum mit einem Ausgleichsrad 30 kämmt,
das koaxial zur Antriebswelle 11, zum Abtriebskettenrad 17
und zum Gehäuse 25 angeordnet und gegenüber diesen auch relativ drehbar ist sowie auf einer Hohlwelle 31 drehfest das Antriebskettenrad 18 des zweiten Kettentriebes 19 trägt.
Die Hohlwelle 31 ist dabei aus dem Gehäuse 25 seitlich durch
das Abtriebskettenrad 17 des ersten Kettentriebes 16 herausgeführt.

Das Ausgleichs- bzw. Differentialgetriebe 24 ist beim gezeigten Ausführungsbeispiel als Stirnrad-Planetengetriebe ausgelegt, weil diese Ausgestaltung sich in Verbindung mit einer
Antriebsvorrichtung für Zweifach-Raupenabzüge 1 als besonders
vorteilhaft erweist. Selbstverständlich kann im Bedarfsfalle
das Ausgleichs- bzw. Differentialgetriebe 24 aber auch als
Kegelrad-Planetengetriebe ausgeführt werden.

Die vorstehend beschriebene Anordnung eines Ausgleichs- bzw.
Differentialgetriebes 24 zwischen dem ersten Kettentrieb 16
für den Antrieb der unteren Raupe 3 und dem zweiten Kettentrieb 19 für den Antrieb der oberen Raupe 2 eines Zweifach-Raupenabzuges 1 hat die besondere Wirkung, daß einerseits
unterschiedliche Laufgeschwindigkeiten zwischen den beiden kraftschlüssig am abzuziehenden Kunststoffprofil angreifende Raupen 2 und 3 kompensiert werden und daß andererseits
ein Ausgleich eventuell auftretender unterschiedlicher Drehmomente stattfindet und damit der Gesamtwirkungsgrad des
Zweifach-Raupenabzuges 1 erhalten bleibt.

Unterschiedliche Verschleißerscheinungen an den endlosen
Raupenketten 4 und 5 der beiden Raupen 2 und 3 und auch
unterschiedliche Verschleißerscheinungen an den Ketten der
beiden Kettentriebe 16 und 19, die sich jeweils hauptsächlich als Änderungen der Kettenteilung auswirken, werden beim
Betrieb des Zweifach-Raupenabzuges relativ einfach und mit
einem minimalen technischen Mehraufwand eliminiert.

Patentansprüche

1. Antriebsvorrichtung für Zweifach-Raupenabzüge zum Abziehen von Kunststoffprofilen aus Extrusionsanlagen oder dergleichen, bei welcher die beiden Raupenabzüge durch ein mit einem Elektromotor, insbesondere Gleichstrommotor, in Verbindung stehendes Untersetzungsgetriebe über Kettentriebe formschlüssig gleichlaufend antriebbar sind und der Wirkabstand zwischen den beiden Raupenabzügen über bewegliche Kupplungen, bspw. Parallelkurbeltriebe, veränderbar ist,
d a d u r c h   g e k e n n z e i c h n e t ,
daß ein Kettentrieb (16) das Untersetzungsgetriebe (13) ausschließlich mit der Antriebswelle (11) einer Raupe (3) verbindet, während ein zweiter Kettentrieb (19) die Antriebsverbindung zwischen den beiden Raupen (2 und 3) herstellt, und daß zwischen der Antriebswelle (11) der einen Raupe (3) und dem Antriebsrad (18) des zweiten Kettentriebes (19) ein Ausgleichs- bzw. Differentialgetriebe (24) angeordnet ist.

2. Antriebsvorrichtung nach Anspruch 1,
d a d u r c h   g e k e n n z e i c h n e t ,
daß das Ausgleichs- bzw. Differentialgetriebe (24) als Stirnrad-Planetengetriebe ausgelegt ist.

3. Antriebsvorrichtung nach einem der Ansprüche 1 und 2,
d a d u r c h   g e k e n n z e i c h n e t ,
daß zwischen das Abtriebsrad (20) des zweiten Kettentriebes (19) und die Antriebswelle (10) der zweiten
Raupe (2) als bewegliche Kupplung ein doppelter Parallelkurbeltrieb (22, 23) eingeschaltet ist.